# EUROPÄISCHE PATENTSCHRIFT

(11) **EP 2 594 710 B1**
(45) Veröffentlichungstag und Bekanntmachung des Hinweises auf die Patenterteilung: **21.12.2016**
(21) Anmeldenummer: 12192214.0
(22) Anmeldetag: 12.11.2012
(51) Int. Cl.: E05B 47/00, E05B 47/02, F16D 43/18, F16D 43/14, E05B 63/12

(54) **Elektromechanische Verschlussvorrichtung mit Fliehkraftkupplung**
Electromechanical closing device with centrifugal clutch
Dispositif de fermeture électromécanique avec embrayage à force centrifuge

(30) Priorität: 16.11.2011 DE 102011055420
(43) Veröffentlichungstag der Anmeldung: 22.05.2013
(73) Patentinhaber: Insys Microelectronics GmbH, 93049 Regensburg (DE)
(72) Erfinder: Wagner, Eduard B., 93051 Regensburg (DE)
(74) Vertreter: Hannke, Christian

(56) Entgegenhaltungen:
- DE-A1- 19 535 065
- DE-B- 1 035 480
- DE-U1- 20 106 477
- US-A- 3 712 438
- US-A1- 2010 236 890

## Beschreibung

Die Erfindung betrifft eine elektromechanische Verschlussvorrichtung mit einer Schlosseinheit umfassend wenigstens ein verlagerbares Schlossriegelelement, mit einer Antriebseinheit umfassend wenigstens zwei Antriebsmotoren, mit einer Kupplungseinheit umfassend wenigstens zwei Fliehkraftkupplungseinrichtungen zum Kuppeln oder zum Entkuppeln der Antriebsmotoren mit oder von einer Getriebeeinheit zum Treiben des wenigstens einen verlagerbaren Schlossriegelelements, bei welcher die Fliehkraftkupplungseinrichtungen jeweils ein Eingangskupplungselement und ein Ausgangskupplungselement aufweisen, wobei das Eingangskupplungselement auf einem Antriebsmotorwellenelement verdrehsicher befestigt ist und das Ausgangskupplungselement gegenüber dem Antriebsmotorwellenelement drehbar gelagert ist.

Eine gattungsgemäße elektromechanische Verschlussvorrichtung ist beispielweise aus der Patentschrift DE 195 35 065 C2 bekannt. Die dort gezeigte elektromechanische Verschlussvorrichtung weist ein elektromechanisches Schloss mit einem durch eine Getriebeanordnung verlagerbaren Riegel auf. Das elektromechanische Schloss besitzt darüber hinaus hinsichtlich einer Antriebseinheit eine Redundanz mit zwei Elektromotoren zur Erhöhung der Betriebssicherheit, an deren Antriebswellen jeweils eine Fliehkraftkupplung vorgesehen ist. Mittels der Fliehkraftkupplungen können die Elektromotoren bedarfsweise mit der Getriebeeinheit mechanisch wirksam gekuppelt oder von dieser entsprechend entkuppelt werden. Dieses Kuppeln oder Entkuppeln kann vorteilhafter Weise durch den jeweils gewählten Betriebszustand des jeweiligen Elektromotors derart geschehen, dass der Elektromotor bei seinem Stillstand von der Getriebeeinheit mechanisch entkuppelt ist. Bei entsprechendem Betrieb des Elektromotors kann dieser mittels der Fliehkraftkupplung jedoch konstruktiv einfach mit der Getriebeeinheit mechanisch gekuppelt werden.

Es ist Aufgabe der Erfindung das Ansprechverhalten gattungsgemäßer mit Fliehkraftkupplungen ausgerüsteten elektromechanischen Verschlussvorrichtungen zu verbessern.

Die Aufgabe der Erfindung wird von einer elektromechanischen Verschlussvorrichtung nach dem vorliegenden Anspruch 1 gelöst.

Durch die an ihren dem Ausgangskupplungselement zugewandten Seiten zumindest teilweise elastisch verformbaren Lagereinrichtungen ist eine konstruktiv äußerst sensibel ansprechbare elektromechanische Verschlussvorrichtung bereitgestellt, wodurch dass Schlossriegelelement besonders schnell zwischen den Schließ- und Öffenpositionen und umgekehrt verlagert werden kann.

Der Begriff "ihren dem Ausgangskupplungselement zugewandten Seiten" beschreibt im Sinne der Erfindung im Wesentlichen denjenigen Bereich der elastisch verformbaren Lagereinrichtung bzw. des Eingangskupplungselements, der gegenüber dem Ausgangskupplungselement radial weiter innen angeordnet ist und der mit einer Innenseite des Ausgangskupplungselement in reibschlüssigen Reibkontakt gebracht werden kann, wenn die diesbezügliche Fliehkraftkupplungseinrichtung betätigt wird. Insofern ist dieser Bereich direkt, vorzugsweise durch einen geringen Spalt von dem Ausgangskupplungselement getrennt, gegenüberliegend der Innenseite des Ausgangskupplungselements angeordnet.

Hierzu brauchen die dem Ausgangskupplungselement zugewandten und zumindest teilweise elastisch verformbaren Seiten der Lagereinrichtungen lediglich mittels radial nach außen strebender Fliehgewichtselemente gegen das Ausgangskupplungselement gedrückt zu werden, um einen Reibschluss zwischen dem Kupplungseingangselement und dem Kupplungsausgangselement zu ermöglichen.

Der Begriff "elektromechanische Verschlussvorrichtung" beschreibt im Sinne der Erfindung eine elektromechanische Schlossvorrichtung und insbesondere ein elektromechanisches Hochsicherheitsschloss, die zumindest einen motorisch antreibbaren Schlossriegel umfassen.

Mit dem Begriff "Lagereinrichtungen" sind vorliegend Einrichtungen bezeichnet, mittels welchen jeweils ein Fliehgewichtselement in dem Rotationskörper des Eingangskupplungselements gehaltert anordenbar ist.

Der Begriff "axial" bezieht sich im Sinne der Erfindung auf eine Axialrichtung der fiktiven Rotationsachse des Rotationskörpers des Eingangskupplungselements bzw. des Antriebsmotorwellenelements des jeweiligen Antriebsmotors, da die fiktive Rotationsachse und das jeweils zugeordnete Antriebswellenelement bei ordnungsgemäß auf dem Antriebswellenelement befestigten Eingangskupplungselement zusammenfallen.

Entsprechend bezieht sich der im Zusammenhang mit der Erfindung gebrauchte Begriff "radial" auf eine Radialrichtung, welche im Wesentlichen senkrecht zu der fiktiven Rotationsachse angeordnet ist.

Vorzugsweise sind die Lagereinrichtungen konzentrisch um das Antriebsmotorwellenelement angeordnet.

Eine besonders hervorzuhebende Ausführungsvariante sieht vor, dass die Lagereinrichtungen radial außen geöffnet sind, sodass wenigstens ein Wandungsabschnitt der Lagereinrichtungen frei schwingend an einem Nabenbereich des Rotationskörpers angeordnet ist. Die Lagereinrichtungen sind radial außen baulich einfach geöffnet indem wenigstens ein Wandungsabschnitt in axialer Richtung, also in Axialrichtung, geschlitzt ist.

Der Begriff "Nabenkörper" beschreibt im Sinne der Erfindung einen radial weiter innen liegenden Bereich des Rotationskörpers, mittels welchem das Eingangskupplungselement auf dem Antriebswellenelement befestigt ist. Vorzugsweise wird das Eingangskupplungselement auf das Antriebswellenelement aufgepresst. Es können jedoch noch kumulative oder alternative Befestigungsmöglichkeiten verwendet werden.

Des Weiteren ist es besonders vorteilhaft, wenn elastisch verformbare Haltearmelemente zum Halten der Fliehgewichtselemente von einem radial weiter innen angeordneten Nabenbereich des Rotationskörpers nach radial außen erstreckend und anschließend in Umfangsrichtung des Rotationskörpers gekrümmt angeordnet sind. Hierdurch kann das Eingangskupplungselement konstruktiv sehr einfach realisiert werden.

Vorteilhafter Weise besitzen die elastisch verformbaren Haltearmelemente zum Halten der Fliehgewichtselemente eine in Umfangsrichtung des Rotationskörpers gerichtete Krümmung, wodurch sie besonders gut mit dem Ausgangskupplungselement kommunizieren können.

Die Lagereinrichtungen können an ihren dem Ausgangskupplungselement zugewandten Seiten konstruktiv besonders einfach zumindest teilweise elastisch verformbar ausgestaltet sein, wenn die Lagereinrichtungen radial außen jeweils ein elastisch verformbares Haltearmelement zum Halten der Fliehgewichtselemente aufweisen.

Zudem kann das Eingangskupplungselement mit dem Ausgangskupplungselement baulich besonders einfach in Kontakt gebracht werden, wenn das elastisch verformbare Haltearmelement eine radial nach außen gerichtet angeordnete Reibeinrichtung zum reibschlüssigen Verbinden des Eingangskupplungselements mit dem Ausgangskupplungselement umfasst. Vorzugsweise erstreckt sich dieses Haltearmelement insbesondere im Bereich der Reibeinrichtung etwa in Umfangsrichtung des Rotationskörpers bzw. des Eingangskupplungselements, sodass sich die jeweilige Reibeinrichtung besonders günstig an einer Innenfläche des Ausgangskupplungselements anschmiegen kann.

Hierzu ist es vorteilhaft, wenn das Ausgangskupplungselement das Eingangskupplungselement zumindest teilweise konzentrisch umschließt.

Darüber hinaus ist es vorteilhaft, wenn die elastisch verformbaren Haltearmelemente den Rotationskörper in seiner Umfangsrichtung radial außen zumindest teilweise begrenzen. Hierdurch können eingangskupplungsseitige Reibflächen vorteilhaft mit ausgangskupplungsseitigen Reibflächen in Kontakt gebracht werden.

Hierbei weise die elastisch verformbaren Haltearmelemente radial außen vorzugsweise zumindest teilweise jeweils eine mit dem Ausgangskupplungselement korrespondierbare Außenreibfläche mit einer Biegung auf, welche einer Innenreibflächenbiegung des Ausgangskupplungselements entspricht.

Sind die elastisch verformbaren Haltearmelemente ausgehend von einer der Lagereinrichtungen in Umfangsrichtung des Rotationskörpers zu einer weiteren Lagereinrichtung erstreckend angeordnet, kann das Eingangskupplungselement baulich weiter vereinfacht werden.

Eine weiter vereinfachte Ausführungsvariante sieht vor, dass die elastisch verformbaren Haltearmelemente jeweils an ihren radial nach außen gerichteten Oberflächenseiten zumindest teilweise einen Lagersitzbereich einer ersten der Lagereinrichtungen und an ihren radial nach innen gerichteten Oberflächenseiten zumindest teilweise einen Lagersitzbereich einer weiteren der Lagereinrichtungen aufweisen.

Eine sehr gute aber dennoch ausreichend steife Elastizität kann an den Lagereinrichtungen bereitgestellt werden, wenn die elastisch verformbaren Haltearmelemente zwischen einer radial nach außen gerichtet angeordnete Reibeinrichtung und einem radial weiter innen angeordneten Nabenbereich des Rotationskörpers einen materialgeschwächten Haltearmabschnitt aufweisen.

In einer speziellen Ausgestaltung der Erfindung kann es vorteilhaft sein, wenn die Fliehgewichtselemente Reibflächen zum reibschlüssigen Verbinden des Eingangskupplungselements mit dem Ausgangskupplungselement aufweisen. Hierbei können zusätzliche Reibflächen von den Fliehgewichtselementen bereitgestellt werden.

Sind die Fliehgewichtselemente innerhalb der axial offenen Lagereinrichtungen axial gesichert, wobei zwischen den Lagereinrichtungen und den Fliehgewichtselementen eine Nut-Feder-Verbindung besteht, können die Fliehgewichtselemente konstruktiv einfach gegen ein unbeabsichtigtes Herausfallen in der jeweiligen Fliehkraftkupplungseinrichtung gesichert werden. Darüber hinaus können die Fliehgewichtselemente hinsichtlich ihres Massengewichts in Abhängigkeit des zu übertragenen Drehmoments problemlos gewählt werden.

Es versteht sich, dass vorliegend auch andere Verbindungstechniken vorteilhaft zum Einsatz kommen können.

An dieser Stelle sei noch darauf hingewiesen, dass eine außergewöhnlich bevorzugte Ausführungsvariante vorsieht, dass insbesondere das Eingangskupplungselement ein Kunststoff-Spritzgussbauteil ist. Um die vorliegende Fliehkraftkupplungseinrichtung in einer Miniaturausführung fertigen zu können, wurde eine Fertigung aus Kunststoff-Spritzguss mit einem speziellen Anspritzverfahren gewählt, welches es ermöglicht, die komplette Fliehkraftkupplungseinrichtung aus nur fünf Komponenten und einem extrem geringen Durchmesser von etwa 10 mm zu fertigen. Je nach erforderlichem Drehmoment können die Fliehkraftgewichte und der Durchmesser der Fliehkraftkupplungseinrichtung vorteilhafter Weise variiert werden.

Vorzugsweise weist die vorliegende elektromechanische Verschlussvorrichtung bzw. die Schlosseinheit eine seitlich zur Verlagerungsrichtung des Schlossriegelelements wirkende Verriegelungseinrichtung auf, wodurch die Betriebssicherheit nochmals erhöht werden kann. Hierbei wird vorteilhafter Weise nicht nur das verlagerbare Schlossriegelelement sondern auch Verriegelungselemente der seitlich wirkenden Verriegelungseinrichtung über die Fliehkraftkupplungseinrichtungen angetrieben, wodurch die erfindungsgemäße elektromechanische Verschlussvorrichtung nochmals kompakter gebaut werden kann.

Weitere Vorteile, Ziele und Eigenschaften vorliegender Erfindung werden anhand anliegender Zeichnung und nachfolgender Beschreibung erläutert, in welchen beispielhaft eine elektromechanische Verschlussvorrichtung im Zusammenhang mit unterschiedlich gestalteten Fliehkraftkupplungseinrichtungen dargestellt und beschrieben ist.

Komponenten, welche in den nachfolgenden Ausführungsbeispielen der einzelnen Figuren wenigstens im Wesentlichen hinsichtlich ihrer Funktion übereinstimmen, sind hierbei mit identischen jedoch jeweils um eine hunderter Reihe erhöhten Bezugszeichen gekennzeichnet, wobei diese Komponenten der Übersichtlichkeit halber nicht in allen Figuren beziffert und erläutert sein müssen.

In der Zeichnung zeigen:
- Figur 1: schematisch eine perspektivische Explosionsansicht einer elektromechanischen Verschlussvorrichtung mit zwei Fliehkraftkupplungseinrichtungen, bei welchen jeweils ein Eingangskupplungselement einen Rotationskörper mit axial zugänglichen Lagereinrichtungen zum Lagern von Fliehgewichtselementen umfasst, wobei die Lagereinrichtungen an ihren einem Ausgangskupplungselement zugewandten Seiten zumindest teilweise elastisch verformbar sind;
- Figur 2: schematisch verschiedene Detailansichten der Fliehkraftkupplungseinrichtung aus der Figur 1;
- Figur 3: schematisch verschiedene Ansichten einer nicht zur vorliegenden Erfindunggehörenden Fliehkraftkupplungseinrichtung mit innerhalb elastisch verformbaren Halteelementen gelagerten Fliehgewichtselementen;
- Figur 4: schematisch verschiedene Ansichten eines weiteren zweiten Ausführungsbeispiels einer Fliehkraftkupplungseinrichtung mit an elastisch verformbaren Halteelementen gelagerten Reibflächen umfassenden Fliehgewichtselementen; und
- Figur 5: schematisch verschiedene Ansichten eines weiteren dritten Ausführungsbeispiels einer Fliehkraftkupplungseinrichtung mit ebenfalls an elastisch verformbaren Halteelementen gelagerten Reibflächen umfassenden Fliehgewichtselementen.

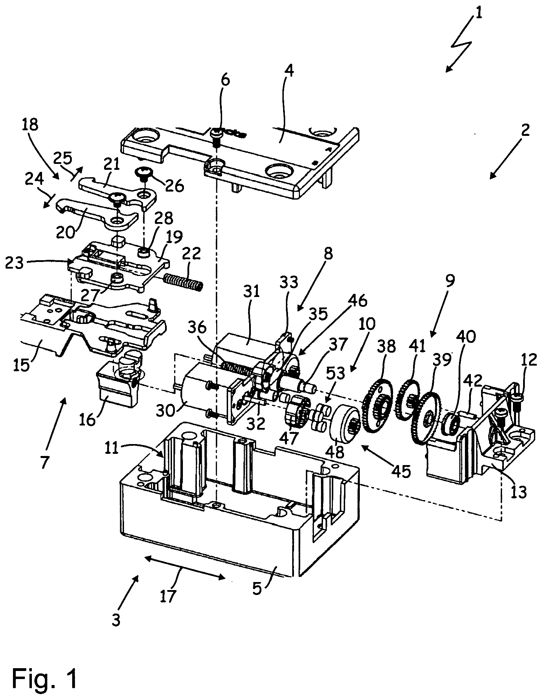

Bei der in der Figur 1 gezeigten elektromechanischen Verschlussvorrichtung 1 handelt es sich um ein elektromechanisches Hochsicherheitsschloss 2, und sie weist ein Gehäuse 3 mit einem Gehäuseoberteil 4 und einem Gehäuseunterteil 5 auf, welche beide mittels Schrauben 6 (hier nur exemplarisch gezeigt) miteinander verschraubt werden können.

Die elektromechanische Verschlussvorrichtung 1 umfasst darüber hinaus eine Schlosseinheit 7, eine Antriebseinheit 8, eine Getriebeeinheit 9 und eine Kupplungseinheit 10, deren Bauteile bzw. Bauteilgruppen in einer mittels des Gehäuseunterteils 5 bereitgestellten Haltekulisse 11 und einer an dem Gehäuseunterteil 5 zusätzlich durch weitere Schrauben 12 anschraubbaren Halteeinrichtung 13 innerhalb der elektromechanischen Verschlussvorrichtung 1 gehalten sind.

Die Schlosseinheit 7 umfasst ein translatorisch verlagerbares Schlossriegelelement 15, welches mittels einer Schiebeeinrichtung 16 in Richtung der Längserstreckung 17 der elektromechanischen Verschlussvorrichtung 1 zwischen einer Schließposition und einer Öffenposition der Schlosseinheit 7 verlagerbar ist.

Darüber hinaus umfasst die Schlosseinrichtung 7 noch eine Verriegelungseinrichtung 18 mit zwei an einer Trägerplatte 19 drehbar gelagerten Verriegelungshaken 20 und 21, die mittels einer einem Wellenelement 22 umfassenden Mechanik 23 seitlich in Verriegelungsrichtungen 24 und 25 heraus schwenkbar an der Trägerplatte 19 gelagert sind. Die Verriegelungshaken 20, 21 sind hierbei über eine Schraubverbindung 26 an Schwenklager 27 und 28 der Trägerplatte 19 gelagert.

Die Antriebseinheit 8 umfasst einen ersten Antriebsmotor 30 und einen zweiten Antriebsmotor 31. Die Antriebsmotoren 30 und 31 weisen jeweils eine Antriebswelle 32 (hier nur exemplarisch beziffert) auf und sind an einem Halteblech 33 derart in dem Gehäuse 3 gehaltert, dass die Antriebswellen 32 in Richtung der Längserstreckung 17 der elektromechanischen Verschlussvorrichtung 1 ausgerichtet sind.

Die Getriebeeinheit 9 umfasst im Wesentlichen eine Hauptgetriebewelle 35, welche ebenfalls mit dem Halteblech 33 positioniert ist. Hierbei steht ein erstes Hauptgetriebewellenende 36 mit der Schlosseinheit 7 in Wirkkontakt, sodass über die Hauptantriebswelle 35 einerseits das Schlossriegelelement 15 translatorisch bewegt und andererseits die Verriegelungshaken 20 und 21 geschwenkt werden können. Auf einem zweiten Hauptgetriebewellenende 37 ist ein erstes Getrieberad 38 sowie ein zweites Getrieberad 39 befestigt, wobei das zweite Hauptgetriebewellenende 37 über eine Gleitlagereinrichtung in Gestalt einer Wellenbuchse 40 an der Halteeinrichtung 13 gelagert ist. Ein Nebengetrieberad 41 ist noch auf einem Achsenstift 42 der Halteeinrichtung 13 gelagert.

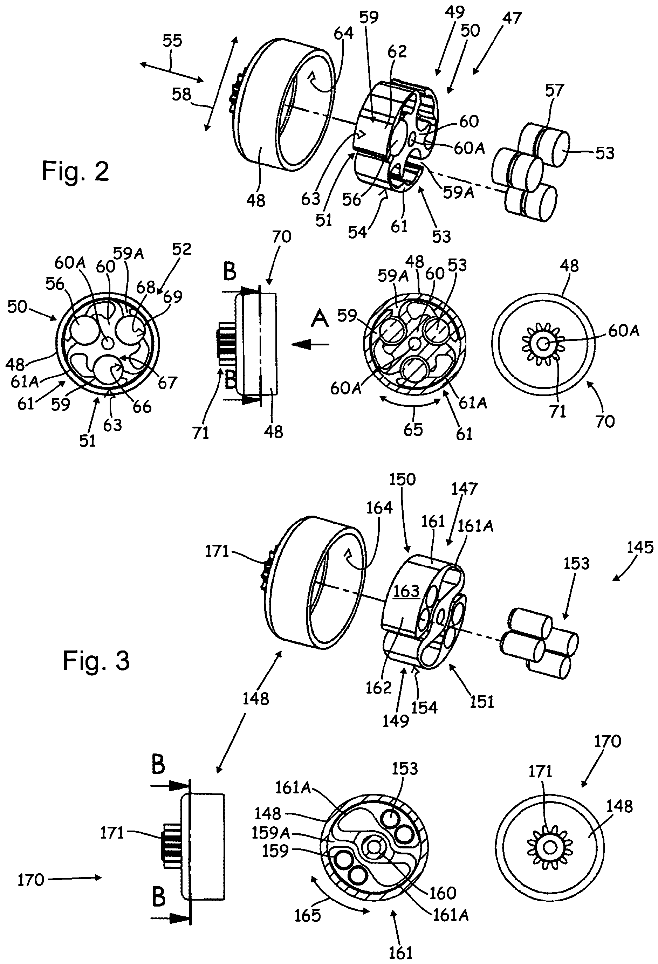

Die auch insbesondere in der Figur 2 detailreicher gezeigte Kupplungseinheit 10 umfasst eine erste Fliehkraftkupplungseinrichtung 45 und eine zweite Fliehkraftkupplungseinrichtung 46 zum Kuppeln der Getriebeeinheit 9 mit der Antriebseinheit 8 oder zum Entkuppeln der Getriebeeinheit 9 von der Antriebseinheit 8.

Jede der beiden Fliehkraftkupplungseinrichtungen 45, 46 umfasst ein Eingangskupplungselement 47 und ein Ausgangskupplungselement 48, wobei das Eingangskupplungselement 47 auf der Antriebsmotorwelle 32 verdrehsicher befestigt ist und das Ausgangskupplungselement 48 auf der Antriebsmotorwelle 32 drehbar gelagert ist, wie beispielhaft nur hinsichtlich der ersten Fliehkraftkupplungseinrichtung 45 beziffert ist, wobei die erste Fliehkraftkupplungseinrichtung 45 beispielhaft hinsichtlich der Darstellungen der Figur 2 gezeigt ist.

Erfindungsgemäß weist das Eingangskupplungselement 47 einen Rotationskörper 49 mit aus Richtung der Längserstreckung 17 zugänglichen Lagereinrichtungen 50, 51 und 52 zum Lagern von Fliehgewichtselementen 53 (hier nur exemplarisch beziffert) auf, wobei die Lagereinrichtungen 50, 51 und 52 an ihren dem Ausgangskupplungselement 48 zugewandten Seiten 54 (nur exemplarisch beziffert) zumindest teilweise elastisch verformbar sind.

Jede der Lagereinrichtungen 50, 51 bzw. 52 weist somit axial 55 zugängliche Aufnahmetaschen 56 (nur exemplarisch beziffert) auf, in welchen die Fliehgewichtselemente 53 jeweils einzeln mittels einer Feder-Nut-Verbindung 57 axial 55 gesichert gelagert sind.

Jede der Lagereinrichtungen 50, 51 bzw. 52 ist zudem radial 58 außen in axialer Richtung 55 derart geschlitzt und damit auch geöffnet ausgestaltet, dass ein radial 58 außen liegender Wandungsabschnitt 59 (nur exemplarisch beziffert) der Lagereinrichtungen 50, 51 bzw. 52 an einer Lücke 59A frei schwingend mit einem Nabenbereich 60 des Rotationskörpers 49 verbunden ist. Der Nabenbereich 60 weist mittig einen Antriebsmotorwellenpresssitz 60A auf.

Dieser radial außenliegende Wandungsabschnitt 59 gestaltet somit ein elastisch verformbares Haltearmelement 61 aus, wobei das elastisch verformbare Haltearmelement 61 durch einen materialgeschwächten Haltearmabschnitt 61 A besonders gute elastische Federeigenschalten erhält.
wobei das elastisch verformbare Haltearmelement 61 eine radial nach außen gerichtete Reibeinrichtung 62 mit einer Außenreibfläche 63 zum reibschlüssigen Verbinden des Eingangskupplungselements 47 mit einer Innenreibfläche 64 des Ausgangskupplungselements 48 umfasst.

Das elastisch verformbare Haltearmelement 61 begrenzt den Rotationskörper 49 in seiner Umfangsrichtung 65 radial 58 außen zumindest teilweise, wobei das elastisch verformbare Haltearmelement 61 sich von dem radial 58 weiter innen angeordneten Nabenbereich 60 nach radial 58 außen und anschließend in Umfangsrichtung 65 des Rotationskörpers 49 gekrümmt erstreckt.

Das Eingangskupplungselement 47 baut besonders kompakt, da das elastisch verformbare Haltearmelemente 61 an seiner radial 58 nach außen gerichteten Oberflächenseite 66 zumindest teilweise einen Lagersitzbereich 67 einer ersten der Lagereinrichtungen 50, 51 bzw. 52 und an ihren radial 58 nach innen gerichteten Oberflächenseiten 68 zumindest teilweise einen Lagersitzbereich 69 einer weiteren der Lagereinrichtungen 50, 51 bzw. 52 ausgestaltet.

Das Ausgangskupplungselement 48 umgibt im ordnungsgemäß zusammengebauten Zustand der jeweiligen Fliehkraftkupplungseinrichtung 45 bzw. 46 in Gestalt einer Kupplungsglocke 70 konzentrisch das Eingangskupplungselement 47. Die Kupplungsglocke 70 bzw. das Ausgangskupplungselement 48 weist rückseitig einen Zahnkranz 71 auf, mittels welchem es mit der Getriebeeinheit 9 kämmen kann.

Das Eingangskupplungselement 47 bzw. die Antriebsseite der jeweiligen Fliehkraftkupplungseinrichtung 45 bzw. 46 kann funktionell in den Nabenbereich 60 und in die elastisch verformbaren Haltearmelemente 61 unterteilt werden, wobei der Nabenbereich 60 direkt auf der jeweiligen Antriebswelle 32 gepresst ist.

Das Ausgangskupplungselement 48 bzw. die Kupplungsglocke 70 wird im Wesentlichen frei beweglich auf der jeweiligen Antriebswelle 32 gelagert.

Wird nun das Eingangskupplungselement 47 durch einen der Antriebsmotoren 30 bzw. 31 in Rotation versetzt, wirken Fliehkräfte auf die Fliehgewichtselemente 53 in radialer Richtung 58. Hierdurch streben die Fliehgewichtselemente 53 radial 58 nach außen und bewegen die elastisch verformbaren Haltearmelemente 61 entgegen der Haltekraft des Materials der elastisch verformbaren Haltearmelemente 61 radial nach außen. Wird bei steigender Drehzahl der Abstand zwischen den Außenreibflächen 63 der elastisch verformbaren Haltearmelemente 61 und der Innenreibfläche 64 des Ausgangskupplungselements 48 überwunden, wirkt ein Teil der Fliehkräfte als Normalkraft auf die Reibflächen 63 und 64. Aus dieser Normalkraft resultiert ja nach vorhandenem Reibungskoeffizienten zwischen den Reibflächen 63, 64 eine Reibungskraft, welche wiederum ein Mitnahmemoment erzeugt, wodurch das Ausgangskupplungselement 48 von dem Eingangskupplungselement 47 angetrieben wird. Somit kann die Getriebeeinheit 9 und letztendlich auch die Schlosseinheit 7 angetrieben werden.

Insbesondere das Eingangskupplungselement 47 ist vorliegend bevorzugt als Kunststoff-Spritzgussbauteil realisiert, sodass zumindest die elastisch verformbaren Haltearmelemente 61 konstruktiv besonders vorteilhaft bereitgestellt sind. Aber auch das Ausgangskupplungselement 48 ist vorteilhafter Weise ein Kunststoff-Spritzgussbauteil, an welchem rückseitig sogleich der Zahnkranz 71 angespritzt ist.

Während die Fliehkraftkupplungseinrichtung 45 in der oberen Darstellung der Figur 2 noch in einem nicht zusammengebauten Zustand gezeigt ist, ist sie gemäß der unteren Darstellungen bereits zusammengesetzt, wobei ganz links eine Aufsicht aus der Richtung A, rechts daneben eine Seitenansicht, noch weiter rechts eine Schnittansicht entlang der Schnittlinie B-B und rechts außen eine Rückansicht der Fliehkraftkupplungseinrichtung 45 gezeigt ist.

Bei der in der Figur 3 gezeigten und nicht zur vorliegenden Erfindung gehörenden Fliehkraftkupplungseinrichtung 145 besitzt ein Eingangskupplungselement 147 lediglich zwei Lagereinrichtungen 150 und 151, mittels welchen Fliehgewichtselemente 153 gelagert sind. Ein Ausgangskupplungselement 148 ist wieder als Kupplungsglocke 170 mit einer rückseitig daran angeordneten Zahnkranz 171 ausgeführt. Insofern besitzt das erste alternative Ausführungsbeispiel einen nahezu identischen Aufbau, wie die Fliehkraftkupplungseinrichtungen 47 und 48 aus den Figuren 1 und 2, und es werden deshalb nachfolgend im Wesentlichen nur die Unterschiede erläutert, um auch Wiederholungen zu vermeiden und die Darstellungen übersichtlich zu halten.

Jede der Lagereinrichtungen 150, 151 zeichnet sich durch ein elastisch verformbares Haltearmelement 160 mit einem geschwächten Haltearmabschnitt 161 A aus, wobei die Fliehgewichtselemente 153 in diesem Ausführungsbeispiel direkt innerhalb des elastisch verformbaren Haltearmelements 160 eingepresst sind; und zwar unterhalb einer Reibeinrichtung 162. Vorteilhafter Weise kann hierdurch eine Außenreibfläche 163 des Eingangskupplungselements 147 auch hier besonders vorteilhaft mit einer Innenreibfläche 164 des Ausgangskupplungselements 148 reiben, wenn die Fliehkraftkupplungseinrichtung 145, wie vorstehend beschrieben betrieben wird.

Die elastisch verformbaren Haltearmelemente 161 erstrecken sich von einem radial weiter innen angeordneten Nabenbereich 160 eines als Rotationskörper 149 ausgebildeten Eingangskupplungselements 147 nach radial außen und krümmen sich anschließend in Umfangsrichtung 165 des Rotationskörpers 149. Insofern sind die Lagereinrichtungen 150 und 152 an ihren dem Ausgangskupplungselement 148 zugewandten Seiten 154 zumindest teilweise elastisch verformbar.

Vorteilhafter Weise ist hier auch eine Lücke 159A am Ende eines Wandungsabschnitts 159 der Lagereinrichtungen 150, 151 bzw. 152 vorgesehen.

Auch begrenzen die elastisch verformbaren Haltearmelemente 161 den Rotationskörper 149 in seiner Umfangsrichtung 165 radial außen.

Zudem sind die elastisch verformbaren Haltearmelemente 161 ausgehend von einer der Lagereinrichtungen 150 bzw. 151 in Umfangsrichtung 165 des Rotationskörpers 129 zu einer weiteren Lagereinrichtung 150, 151 erstreckend angeordnet.

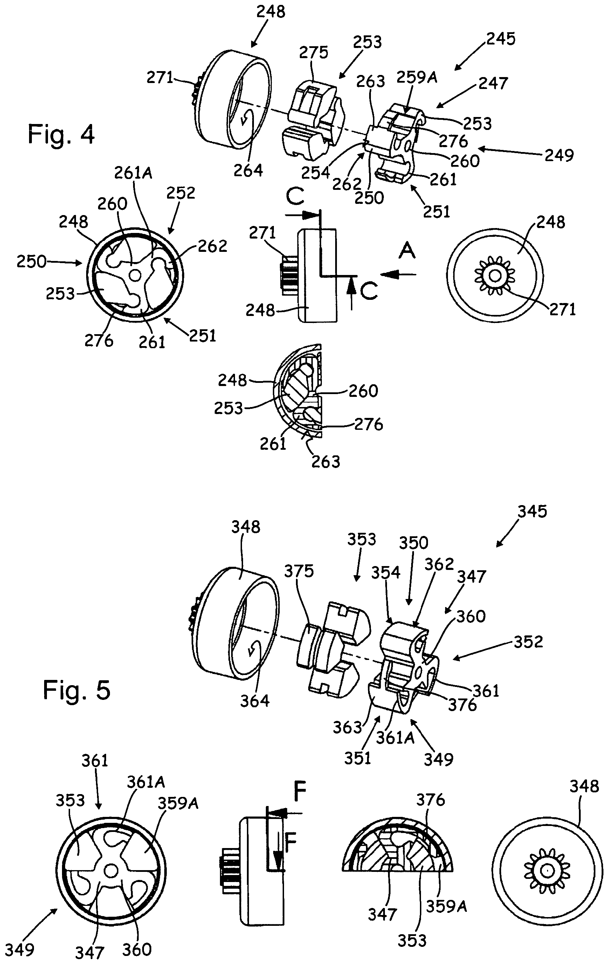

Bei der in den Darstellungen der Figur 4 gezeigten weiteren Fliehkraftkupplungseinrichtung 245 sind ebenfalls ein Eingangskupplungselement 247, ein Ausgangskupplungselement 248 und Fliehgewichtselemente 253 vorhanden. Während das Ausgangskupplungselement 248 mit dem Zahnkranz 271 im Wesentlichen wieder baugleich mit den vorher beschriebenen Ausgangskupplungselementen 48 und 148 ist, weisen die Fliehgewichtselemente 253 jeweils eine zusätzliche Fliehgewichtsreibfläche 275 auf.

Jedes der Fliehgewichtselemente 253 ist diesmal schwenkbar an einem vorzugsweise elastisch verformbaren Haltearmelement 261 von hierfür vorhandener Lagereinrichtungen 250, 251 und 253 gelagert, sodass die Fliehgewichtsreibfläche 275 im Betrieb der Fliehkraftkupplungseinrichtung 245 alleine oder zusätzlich zu einer Außenreibfläche 263 einer Reibeinrichtung 262 des jeweiligen elastisch verformbaren Haltearmelements 261 mit einer Innenreibfläche 264 des Ausgangskupplungselements 248 reiben kann. Vorteilhafter Weise könnten die Haltearmelement 261 nicht oder auch nur vernachlässigbar gering elastisch verformbar sein, da hier allein schon die einzelnen Fliehgewichtselemente 253 einen entsprechenden Reibschluss zwischen dem Eingangskupplungselement 247 und dem Ausgangskupplungselement 248 herstellen können.

Jedenfalls ist zwischen den einzelnen elastisch verformbaren Haltearmelementen 161 jeweils eine Lücke 259A vorhanden, in deren Bereich jeweils ein Führungselement 276 zum zusätzlichen Führen der Fliehgewichtselemente 253 hineinragt.

Die elastisch verformbaren Haltearmelemente 261 erstrecken sich von einem radial weiter innen angeordneten Nabenbereich 260 eines Rotationskörpers 249 nach radial außen und sind anschließend in Umfangsrichtung des Rotationskörpers 249 gekrümmt ausgeformt. Somit begrenzen die elastisch verformbaren Haltearmelemente 261 auch hier den Rotationskörper 249 des Eingangskupplungselements 247 in seiner Umfangsrichtung radial außen, zumindest teilweise. Insofern sind die Lagereinrichtungen 250, 251 und 252 auch hier an ihren dem Ausgangskupplungselement 248 zugewandten Seiten 254 zumindest teilweise elastisch verformbar.

Auch weisen die elastisch verformbaren Haltearmelemente 261 zwischen einer radial nach außen gerichtet angeordnete Reibeinrichtung 262 und einem radial weiter innen angeordneten Nabenbereich 260 des Rotationskörpers 249 einen materialgeschwächten Haltearmabschnitt 261A auf.

Das in den Darstellungen der Figur 5 gezeigte Eingangskupplungselement 347 einer weiteren ein Ausgangskupplungselement 348 und Fliehgewichtselemente 353 umfassenden Fliehkraftkupplungseinrichtung 345 verfügt ebenfalls wieder über drei jeweils mit einem elastisch verformbaren Haltearmelement 361 ausgestatten Lagereinrichtungen 350, 351 und 352. Insofern entspricht es im Wesentlichen den Eingangskupplungselementen 47, 147 und 247 der zuvor beschriebenen Fliehkraftkupplungseinrichtungen 45, 145 bzw. 245.

Auch hier zeichnen sich die Fliehgewichtselemente 353 speziell über eigene Fliehgewichtsreibflächen 375 aus, die neben Außenreibflächen 363 der elastisch verformbaren Haltearmelemente 361 zusätzlich mit einer Innenreibfläche 364 des Ausgangskupplungselements 348 reiben können. Für eine zusätzliche Führung der Fliehgewichtselemente 353 sorgt jeweils ein Führungselement 376 an dem jeweiligen elastisch verformbaren Haltearmelement 361, wobei das Führungselement 376 wieder in eine Lücke 359A zwischen den vorhandenen Lagereinrichtungen 350, 351 und 352 hineinragt.

Das Eingangskupplungselement 347 ist als Rotationskörper 349 ausgestaltet und die elastisch verformbaren Haltearmelemente 361 begrenzen den Rotationskörper 349 radial außen zumindest teilweise.

Die elastisch verformbaren Haltearmelemente 361 weisen zwischen einer radial nach außen gerichtet angeordnete Reibeinrichtung 362 und einem radial weiter innen angeordneten Nabenbereich 360 zur Verbesserung der Elastizität einen materialgeschwächten Haltearmabschnitt 361A auf.

Die elastisch verformbaren Haltearmelemente 361 erstrecken sich von dem radial weiter innen angeordneten Nabenbereich 360 nach radial außen und krümmen sich anschließend in Umfangsrichtung des Rotationskörpers 349. Insofern sind die Lagereinrichtungen 350, 351 und 352 an ihren dem Ausgangskupplungselement 348 zugewandten Seiten 354 zumindest teilweise elastisch verformbar.

Es versteht sich, dass es sich bei den vorstehend erläuterten Ausführungsbeispielen lediglich um erste vorteilhafte Ausgestaltungen der erfindungsgemäßen elektromechanischen Verschlussvorrichtung und diesbezüglicher im Wesentlichen als Kunststoff-Spritzgussbauteile hergestellte Fliehkraftkupplungseinrichtungen handelt. Insofern beschränkt sich die in den Ansprüchen definierte Erfindung nicht auf diese vorteilhaften Ausführungsbeispiele.

### Bezugszeichenliste

- 1: elektromechanische Verschlussvorrichtung
- 2: elektromechanisches Hochsicherheitsschloss
- 3: Gehäuse
- 4: Gehäuseoberteil
- 5: Gehäuseunterteil
- 6: Schrauben
- 7: Schlosseinheit
- 8: Antriebseinheit
- 9: Getriebeeinheit
- 10: Kupplungseinheit
- 11: Haltekulisse
- 12: weitere Schrauben
- 13: Halteeinrichtung
- 15: Schlossriegelelement
- 16: Schiebeeinrichtung
- 17: Längserstreckung
- 18: Verriegelungseinrichtung
- 19: Trägerplatte
- 20: erster Verriegelungshaken
- 21: zweiter Verriegelungshaken
- 22: Wellenelement
- 23: Mechanik
- 24: erste Verriegelungsrichtung
- 25: zweite Verriegelungsrichtung
- 26: Schraubverbindung
- 27: erstes Schwenklager
- 28: zweites Schwenklager
- 30: erster Antriebsmotor
- 31: zweiter Antriebsmotor
- 32: Antriebswelle
- 33: Halteblech
- 35: Hauptgetriebewelle
- 36: erstes Hauptgetriebewellenende
- 37: zweites Hauptgetriebewellenende
- 38: erstes Getrieberad
- 39: zweites Getrieberad
- 40: Wellenbuchse bzw. Gleitlagereinrichtung
- 41: Nebengetrieberad
- 42: Achsenstift
- 45: erste Fliehkraftkupplungseinrichtung
- 46: zweite Fliehkraftkupplungseinrichtung
- 47: Eingangskupplungselement
- 48: Ausgangskupplungselement
- 49: Rotationskörper
- 50: erste Lagereinrichtung
- 51: zweite Lagereinrichtung
- 52: dritte Lagereinrichtung
- 53: Fliehgewichtselemente
- 54: zugewandten Seiten
- 55: axial
- 56: Aufnahmetaschen
- 57: Feder-Nut-Verbindung
- 58: radial
- 59: Wandungsabschnitt
- 59A: Lücke
- 60: Nabenbereich
- 60A: Antriebsmotorwellenpresssitz
- 61: elastisch verformbares Haltearmelement
- 61 A: materialgeschwächter Haltearmabschnitt
- 62: Reibeinrichtung
- 63: Außenreibfläche
- 64: Innenreibfläche
- 65: Umfangsrichtung
- 66: nach außen gerichtete Oberflächenseite
- 67: erster Lagersitzbereich
- 68: nach innen gerichtete Oberflächenseite
- 69: zweiter Lagersitzbereich
- 70: Kupplungsglocke
- 71: Zahnkranz

- 145: erste Fliehkraftkupplungseinrichtung
- 147: Eingangskupplungselement
- 148: Ausgangskupplungselement
- 149: Rotationskörper
- 150: erste Lagereinrichtung
- 151: zweite Lagereinrichtung
- 153: Fliehgewichtselemente
- 154: zugewandten Seiten
- 159: Wandungsabschnitt
- 159A: Lücke
- 160: Nabenbereich
- 161: elastisch verformbares Haltearmelement
- 161A: materialgeschwächter Haltearmabschnitt
- 162: Reibeinrichtung
- 163: Außenreibfläche
- 164: Innenreibfläche
- 165: Umfangsrichtung
- 170: Kupplungsglocke
- 171: Zahnkranz

- 245: erste Fliehkraftkupplungseinrichtung
- 247: Eingangskupplungselement
- 248: Ausgangskupplungselement
- 249: Rotationskörper
- 250: erste Lagereinrichtung
- 251: zweite Lagereinrichtung
- 252: dritte Lagereinrichtung
- 253: Fliehgewichtselemente
- 259A: Lücke
- 260: Nabenbereich
- 261: elastisch verformbares Haltearmelement
- 261A: materialgeschwächter Haltearmabschnitt
- 262: Reibeinrichtung
- 263: Außenreibfläche
- 264: Innenreibfläche
- 271: Zahnkranz
- 275: Fliehgewichtsreibfläche
- 276: Führungselement

- 345: erste Fliehkraftkupplungseinrichtung
- 347: Eingangskupplungselement
- 348: Ausgangskupplungselement
- 349: Rotationskörper
- 350: erste Lagereinrichtung
- 351: zweite Lagereinrichtung
- 352: dritte Lagereinrichtung
- 353: Fliehgewichtselemente
- 254: zugewandten Seite
- 359A: Lücke
- 360: Nabenbereich
- 361: elastisch verformbares Haltearmelement
- 361A: materialgeschwächter Haltearmabschnitt
- 362: Reibeinrichtung
- 363: Außenreibfläche
- 364: Innenreibfläche
- 375: Fliehgewichtsreibfläche
- 376: Führungselement

## Patentansprüche

1. Elektromechanische Verschlussvorrichtung (1) mit einer Schlosseinheit (7) umfassend wenigstens ein verlagerbares Schlossriegelelement (15), mit einer Antriebseinheit (8) umfassend wenigstens zwei Antriebsmotoren (30, 31), mit einer Kupplungseinheit (10) umfassend wenigstens zwei Fliehkraftkupplungseinrichtungen (45, 46; 245; 345) zum Kuppeln der Antriebsmotoren (30, 31) mit einer Getriebeeinheit (9) zum Treiben des wenigstens einen verlagerbaren Schlossriegelelements (15) oder zum Entkuppeln der Antriebsmotoren (30, 31) von der Getriebeeinheit (9), bei welcher die Fliehkraftkupplungseinrichtungen (45; 245; 345, 46) jeweils ein Eingangskupplungselement (47; 247; 347) und ein Ausgangskupplungselement (48; 148; 248; 348) aufweisen, wobei das Eingangskupplungselement (47; 247; 347) auf
einem Antriebsmotorwellenelement (32) verdrehsicher befestigt ist und das Ausgangskupplungselement (48; 248; 348) gegenüber dem Antriebsmotorwellenelement (32) drehbar gelagert ist,
**dadurch gekennzeichnet, dass**
das Eingangskupplungselement (47; 247; 347) einen Rotationskörper (49; 149; 249) mit axial zugänglichen Lagereinrichtungen (50, 51, 52; 250, 251, 252; 350, 351, 352) zum in radialer Richtung (58) teilweise Lagern von Fliehgewichtselementen (53; 253; 353) umfasst, wobei die Lagereinrichtungen (50, 51, 52; 250, 251, 252; 350, 351, 352) an ihren dem Ausgangskupplungselement (48; 248; 348) zugewandten Seiten (54; 254; 354) zumindest teilweise elastisch verformbar sind und radial (58) außen geöffnet sind, indem wenigstens ein radial außen liegender Wandungsabschnitt (59) der Lagereinrichtungen (50, 51, 52; 250, 251, 252; 350, 351, 352) in axialer Richtung (55) geschlitzt ist.

2. Elektromechanische Verschlussvorrichtung (1) nach Anspruch 1,
**dadurch gekennzeichnet, dass**
wenigstens ein Wandungsabschnitt (59; 159) der Lagereinrichtungen (50, 51, 52; 250, 251, 252; 350, 351, 352) frei schwingend an einem Nabenbereich (60; 160; 260; 360) des Rotationskörpers (49; 149; 249; 349) angeordnet ist.

3. Elektromechanische Verschlussvorrichtung (1) nach Anspruch 1 oder 2,
**dadurch gekennzeichnet, dass**
die Lagereinrichtungen (50, 51, 52; 250, 251, 252; 350, 351, 352) radial (58) außen jeweils ein elastisch verformbares Haltearmelement (61; 261; 361) zum Halten der Fliehgewichtselemente (53; 253; 353) aufweisen, welches eine radial (58) nach außen gerichtet angeordnete Reibeinrichtung (62; 262; 362) zum reibschlüssigen Verbinden des Eingangskupplungselements (47; 247; 347) mit dem Ausgangskupplungselement (48; 248; 348) umfasst.

4. Elektromechanische Verschlussvorrichtung (1) nach Anspruch 3,
**dadurch gekennzeichnet, dass**
die elastisch verformbaren Haltearmelemente (61; 261; 361) den Rotationskörper (49; 249; 349) in seiner Umfangsrichtung (65) radial (58) außen zumindest teilweise begrenzen.

5. Elektromechanische Verschlussvorrichtung (1) nach Anspruch 3 oder 4,
**dadurch gekennzeichnet, dass**
die elastisch verformbaren Haltearmelemente (61; 261; 361) von einem radial (58) weiter innen angeordneten Nabenbereich (60; 260; 360) des Rotationskörpers (49; 249; 349) nach radial (58) außen erstreckend und anschließend in Umfangsrichtung (65) des Rotationskörpers (49; 149; 249; 349) gekrümmt angeordnet sind.

6. Elektromechanische Verschlussvorrichtung (1) nach einem der Ansprüche 3 bis 5,
**dadurch gekennzeichnet, dass**
die elastisch verformbaren Haltearmelemente (61; 261; 361) ausgehend von einer der Lagereinrichtungen (50, 51, 52,; 250, 251, 252; 350, 351, 352) in Umfangsrichtung (65) des Rotationskörpers (49; 249; 349) zu einer weiteren Lagereinrichtung (50, 51, 52; 250, 251, 252; 350, 351, 352) erstreckend angeordnet sind.

7. Elektromechanische Verschlussvorrichtung (1) nach einem der Ansprüche 3 bis 6, **dadurch gekennzeichnet, dass**
die elastisch verformbaren Haltearmelemente (61; 261; 361) jeweils an ihren radial (58) nach außen gerichteten Oberflächenseiten (66) zumindest teilweise einen Lagersitzbereich (67) einer ersten der Lagereinrichtungen (50, 51, 52; 250, 251, 252; 350, 351, 352) und an ihren radial (58) nach innen gerichteten Oberflächenseiten (68) zumindest teilweise einen Lagersitzbereich (69) einer weiteren der Lagereinrichtungen (50, 51, 52; 250, 251, 252; 350, 351, 352) aufweisen.

8. Elektromechanische Verschlussvorrichtung (1) nach einem der Ansprüche 3 bis 7, **dadurch gekennzeichnet, dass**
die elastisch verformbaren Haltearmelemente (61; 261; 361) zwischen einer radial (58) nach außen gerichtet angeordnete Reibeinrichtung (62;; 262; 362) und einem radial (58) weiter innen angeordneten Nabenbereich (60; 260; 360) des Rotationskörpers (49; 249; 349) einen materialgeschwächten Haltearmabschnitt (61 A; 261 A; 361 A) aufweisen.

9. Elektromechanische Verschlussvorrichtung (1) nach einem der Ansprüche 1 bis 8,
**dadurch gekennzeichnet, dass**
die Fliehgewichtselemente (253; 353) Reibflächen (275; 375) zum reibschlüssigen Verbinden des Eingangskupplungselements (247; 347) mit dem Ausgangskupplungselement (248; 348) aufweisen.

10. Elektromechanische Verschlussvorrichtung (1) nach einem der Ansprüche 1 bis 9,
**dadurch gekennzeichnet, dass**
das Eingangskupplungselement (47; 247; 347) ein Kunststoff-Spritzgussbauteil ist.

## Claims

1. Electromechanical closing device (1) with a lock unit (7) comprising at least one movable lock bolt element (15), with a drive unit (8) comprising at least two drive motors (30, 31), with a clutch unit (10) comprising at least two centrifugal clutch apparatuses (45, 46; 245; 345) for coupling the drive motors (30, 31) to a transmission unit (9) for driving the at least one movable lock bolt element (15) or for uncoupling the drive motors (30, 31) from the transmission unit (9), in which the centrifugal clutch apparatuses (45; 245; 345, 46) each have an input clutch element (47; 247; 347) and an output clutch element (48; 148; 248; 348), the input clutch element (47; 247; 347) being attached in a torsion-proof manner to a drive motor shaft element (32) and the output clutch element (48; 248; 348) being mounted so as to rotate relative to the drive motor shaft element (32), **characterised in that** the input clutch element (47; 247; 347) comprises a rotational body (49; 149; 249) with axially accessible bearing apparatuses (50, 51, 52; 250, 251, 252; 350, 351, 352) for mounting centrifugal weight elements (53; 253; 353) in the radial direction (58) in part, the bearing apparatuses (50, 51, 52; 250, 251, 252; 350, 351, 352) being elastically deformable at least in part on their sides (54; 254; 354) facing the output clutch element (48; 248; 348) and said bearing apparatuses being radially (58) open outwardly, by at least one radially outer wall portion (59) of the bearing apparatuses (50, 51, 52; 250, 251, 252; 350, 351, 352) being slotted in the axial direction (55).

2. Electromechanical closing device (1) according to claim 1, **characterised in that** at least one wall portion (59; 159) of the bearing apparatuses (50, 51, 52; 250, 251, 252; 350, 351, 352) is arranged on a hub region (60; 160; 260; 360) of the rotational body (49; 149; 249; 349) in a freely oscillating manner.

3. Electromechanical closing device (1) according to either claim 1 or claim 2, **characterised in that**, radially (58) on the outside, the bearing apparatuses (50, 51, 52; 250, 251, 252; 350, 351, 352) each have an elastically deformable holding arm element (61; 261; 361) for holding the centrifugal weight elements (53; 253; 353) which comprises a friction apparatus (62; 262; 362) which is arranged so as to be directed radially (58) outwards for connecting the input clutch element (47; 247; 347) to the output clutch element (48; 248; 348) in a frictionally engaged manner.

4. Electromechanical closing device (1) according to claim 3, **characterised in that** the elastically deformable holding arm elements (61; 261; 361) delimit the rotational body (49; 249; 349) at least in part in its circumferential direction (65) radially (58) on the outside.

5. Electromechanical closing device (1) according to either claim 3 or claim 4, **characterised in that** the elastically deformable holding arm elements (61; 261; 361) are arranged such that they extend radially (58) outwards from a hub region (60; 260; 360) of the rotational body (49; 249; 349) which is arranged radially (58) further inwards and subsequently are curved in the circumferential direction (65) of the rotational body (49; 149; 249; 349).

6. Electromechanical closing device (1) according to any of claims 3 to 5, **characterised in that** the elastically deformable holding arm elements (61; 261; 361) are arranged so to extend from one of the bearing apparatuses (50, 51, 52; 250, 251, 252; 350, 351, 352) in the circumferential direction (65) of the rotational body (49; 249 349) to another bearing apparatus (50, 51, 52; 250, 251, 252; 350, 351, 352).

7. Electromechanical closing device (1) according to any of claims 3 to 6, **characterised in that** the elastically deformable holding arm elements (61; 261; 361) each have, at least in part, a bearing seat region (67) of a first of the bearing apparatuses (50, 51, 52; 250, 251, 252; 350, 351, 352) on the surface sides (66) thereof which are directed radially (58) outwards and have, at least in part, a bearing seat region (69) of another of the bearing apparatuses (50, 51, 52; 250, 251, 252; 350, 351, 352) on the surface sides (68) thereof which are directed radially (58) inwards.

8. Electromechanical closing device (1) according to any of claims 3 to 7, **characterised in that** the elastically deformable holding arm elements (61; 261; 361) have a holding arm portion (61 A; 261 A; 361 A) of material weakness between a friction apparatus (62; 262; 362) which is arranged so as to be directed radially (58) outwards and a hub region (60; 260; 360) of the rotational body (49; 249; 349) which is arranged radially (58) further inwards.

9. Electromechanical closing device (1) according to any of claims 1 to 8, **characterised in that** the centrifugal weight elements (253; 353) have friction surfaces (275; 375) for connecting the input clutch element (247; 347) to the output clutch element (248; 348) in a frictionally engaged manner.

10. Electromechanical closing device (1) according to any of claims 1 to 9, **characterised in that** the input clutch element (47; 247; 347) is a plastics injection-moulded component.

## Revendications

1. Dispositif de fermeture électromagnétique (1), avec une unité de serrure (7) comprenant au moins un élément formant pêne dormant (15) déplaçable, avec une unité d'entraînement (8) comprenant au moins deux moteurs d'entraînement (30, 31), avec une unité d'embrayage (10) comprenant au moins deux dispositifs d'embrayage centrifuge (45, 46 ; 245 ; 345) pour accoupler les moteurs d'entraînement (30, 31) à une unité de transmission (9) pour chasser ledit au moins un élément formant pêne dormant (15) déplaçable, ou pour découpler les moteurs d'entraînement (30, 31) de l'unité de transmission (9), dans lequel les dispositifs d'embrayage centrifuge (45 ; 245 ; 345, 46) présentent respectivement un élément d'embrayage d'entrée (47 ; 247 ; 347) et un élément d'embrayage de sortie (48 ; 148 ; 248 ; 348), dans lequel l'élément d'embrayage d'entrée (47 ; 247 ; 347) est fixé de manière solidaire en rotation à un élément d'arbre de moteur d'entraînement (32), et l'élément d'embrayage de sortie (48 ; 248 ; 348) est monté en rotation par rapport à l'élément d'arbre de moteur d'entraînement (32),
**caractérisé en ce que** l'élément d'embrayage d'entrée (47 ; 247 ; 347) comprend un corps de révolution (49 ; 149 ; 249) avec des dispositifs de palier (50, 51, 52 ; 250, 251, 252 ; 350, 351, 352) à accès axial pour le montage partiel d'éléments de masselotte (53 ; 253 ; 353) dans la direction radiale (58), dans lequel les dispositifs de palier (50, 51, 52 ; 250, 251, 252; 350, 351, 352) sont au moins en partie élastiquement déformables sur leurs faces (54 ; 254 ; 354) tournées vers l'élément d'embrayage de sortie (48 ; 248 ; 348) et ouverts radialement (58) à l'extérieur **en ce qu'**au moins une section de paroi (59), située radialement à l'extérieur, des dispositifs de palier (50, 51, 52 ; 250, 251, 252 ; 350, 351, 352) est fendue dans la direction axiale (55).

2. Dispositif de fermeture électromagnétique (1) selon la revendication 1, **caractérisé en ce qu'**au moins une section de paroi (59 ; 159) des dispositifs de palier (50, 51, 52 ; 250, 251, 252 ; 350, 351, 352) est disposée en oscillant librement au niveau d'une zone de moyeu (60 ; 160 ; 260 ; 360) du corps de révolution (49 ; 149 ; 249 ; 349).

3. Dispositif de fermeture électromagnétique (1) selon la revendication 1 ou 2, **caractérisé en ce que** les dispositifs de palier (50, 51, 52; 250, 251, 252 ; 350, 351, 352) présentent radialement (58) à l'extérieur respectivement un élément de bras de retenue (61 ; 261 ; 361) élastiquement déformable pour retenir les éléments de masselotte (53 ; 253 ; 353), ledit élément comprenant un dispositif de friction (62 ; 262 ; 362) disposé en étant tourné vers l'extérieur pour relier par friction l'élément d'embrayage d'entrée (47 ; 247 ; 347) à l'élément d'embrayage de sortie (48 ; 248 ; 348).

4. Dispositif de fermeture électromagnétique (1) selon la revendication 3, **caractérisé en ce que** les éléments de bras de retenue (61 ; 261 ; 361) élastiquement déformables limitent au moins en partie le corps de révolution (49 ; 249 ; 349) dans sa direction circonférentielle (65) radialement (58) à l'extérieur.

5. Dispositif de fermeture électromagnétique (1) selon la revendication 3 ou 4, **caractérisé en ce que** les éléments de bras de retenue (61 ; 261 ; 361) élastiquement déformables sont disposés à partir d'une zone de moyeu (60 ; 260 ; 360) du corps de révolution (49 ; 249 ; 349), disposée radialement (58) davantage à l'intérieur, en s'étendant radialement (58) à l'extérieur et enfin de manière courbée dans la direction circonférentielle (65) du corps de révolution (49 ; 149 ; 249 ; 349).

6. Dispositif de fermeture électromagnétique (1) selon l'une quelconque des revendications 3 à 5, **caractérisé en ce que** les éléments de bras de retenue (61 ; 261 ; 361) élastiquement déformables sont disposés en partant d'un des dispositifs de palier (50, 51, 52 ; 250, 251, 252 ; 350, 351, 352) dans la direction circonférentielle (65) du corps de révolution (49 ; 249 ; 349) en s'étendant jusqu'à un autre dispositif de palier (50, 51, 52 ; 250, 251, 252 ; 350, 351, 352).

7. Dispositif de fermeture électromagnétique (1) selon l'une quelconque des revendications 3 à 6, **caractérisé en ce que** les éléments de bras de retenue (61 ; 261 ; 361) élastiquement déformables présentent respectivement sur leurs côtés de surface (66) orientés radialement (58) vers l'extérieur au moins en partie une zone de siège de palier (67) d'un premier des dispositifs de palier (50, 51, 52 ; 250, 251, 252 ; 350, 351, 352) et sur leurs côtés de surface (68) orientés vers l'intérieur au moins en partie une zone de siège de palier (69) d'un autre des dispositifs de palier (50, 51, 52 ; 250, 251, 252 ; 350, 351, 352).

8. Dispositif de fermeture électromagnétique (1) selon l'une quelconque des revendications 3 à 7, **caractérisé en ce que** les éléments de bras de retenue (61 ; 261 ; 361) élastiquement déformables présentent entre un dispositif de friction (62 ; 262 ; 362) disposé en étant tourné radialement (58) vers l'extérieur et une zone de moyeu (60 ; 260 ; 360), disposée radialement (58) davantage à l'intérieur, du corps de révolution (49 ; 249 ; 349) une portion de bras de retenue (61A ; 261A ; 361 A) affaiblie en matériau.

9. Dispositif de fermeture électromagnétique (1) selon l'une quelconque des revendications 1 à 8, **caractérisé en ce que** les éléments de masselotte (253 ; 353) présentent des surfaces de friction (275 ; 375) pour relier par friction l'élément d'embrayage d'entrée (247 ; 347) à l'élément d'embrayage de sortie (248 ; 348).

10. Dispositif de fermeture électromagnétique (1) selon l'une quelconque des revendications 1 à 9, **caractérisé en ce que** l'élément d'embrayage d'entrée (47 ; 247 ; 347) est une pièce moulée par injection en plastique.
